# EUROPEAN PATENT APPLICATION

(11) **EP 1 087 550 A1**
(43) Date of publication of application: **28.03.2001**
(21) Application number: 00610098.6
(22) Date of filing: 26.09.2000
(51) Int. Cl.: H04B 10/17, H01S 3/067

(54) **Method and device for providing optical amplification**

(30) Priority: 27.09.1999 DK 136999
(71) Applicant: TELLABS DENMARK A/S, 2750 Ballerup (DK)
(72) Inventor: Poulsen, Henrik Noerskov, 2650 Hvidovre (DK); Buxens, Alvaro, 1620 Copenhagen V (DK)
(74) Representative: Boesen, Johnny Peder

(57) **Abstract**

In a method of providing amplification of optical wavelengths in a first band, a length of active fibre (7) is coupled in series with an optical fibre amplifier (1) adapted to amplify optical wavelengths in a second band. In this way a method of providing amplification of optical wavelengths in one band, e.g. the L-band, by means of already existing components, such as optical amplifiers adapted to amplify optical wavelengths in another band, is provided, thus avoiding the need to keep separate amplifiers in stock for each band. Similarly an optical amplifier device is described.

## Description

The invention relates to a method of providing amplification of optical wavelengths in a first band and to an optical amplifier device therefor.

In optical teletransmission networks wavelength-division multiplexed (WDM) systems are commonly used as a means to obtain a high transmission capacity. Normally, a number of different wavelengths in the so-called C-band (conventional band), 1530-1570 nm, are used, each wavelength carrying its own transmission channel. However, the demand for transmission capacity is still increasing and it has therefore been suggested to use also other wavelengths for transmission. As an example, the longer wavelengths in the so-called L-band (long wave band), 1570-1610 nm, have been suggested as also this band is situated in the low loss region of standard fibres, but shorter wavelengths such as 1490-1530 nm could also be a possibility.

Thus, there is also a demand for optical amplifiers which can be used at these additional wavelengths.

Although erbium-doped fibre amplifiers (EDFA's) intended for use in the C-band might also be able to amplify optical signals in the L-band to some extent, they are relatively inefficient in this band, and thus with the present state of the art it is not possible to utilize a common EDFA for amplification in both bands simultaneously.

EP 911 926 suggests a series coupling of two optical amplifiers separated by an equalizer in order to obtain a wider bandwidth. However, its bandwidth is still not sufficient to provide amplification in both bands, and further the solution requires the use of two different optical amplifiers as well as the equalizer which leads to a relatively expensive solution. Also EP 926 849 mentions a series coupling of two or more optical amplifiers, but the resulting bandwidth is even narrower and covers the C-band only.

Therefore, separate amplifiers for the C-band and the L-band, respectively, have to be used. Hence, design and development of optical amplifiers in the L-band are now an important field in order to mature this transmission window.

Several ideas for L-band amplifiers have already been suggested. Some solutions use new material compositions for the fibre, such as tellurite-based EDFA's. However, these materials have a relatively nonuniform gain spectrum and they are not yet ready for practical applications.

Others have suggested the idea of using Raman amplifiers to generate gain in the L-band, but a disadvantage of using Raman amplification is the amount of pump power needed to obtain the same gain.

Another solution is disclosed in J. Lee, U.-C. Ryu, S. J. Ahn and N. Park, "Enhancement of Power Conversion Efficiency for an L-band EDFA with a Secondary Pumping Effect in the Unpumped EDF Section," IEEE Photonics Technology Letters, Vol. 11, No. 1, January 1999, pp. 42-44. This document describes a structure using two series coupled lengths of erbium-doped fibre of which only one is pumped in conventional manner from e.g. a 980 nm laser. Detrimental 1550 nm band amplified spontaneous emission (ASE) generated in the pumped length of fibre is used as a secondary pump source for the unpumped length of fibre, thereby providing L-band amplification in this length of fibre.

However, all the above-mentioned solutions have the disadvantage that the resulting amplifiers can only be used in the L-band, and thus, in order to obtain a system which can be used for transmission in both bands, i.e. the L-band and the C-band, separate L-band amplifiers and C-band amplifiers must be manufactured and kept in stock. The same applies when other bands are used simultaneously.

Thus, it is an object of the invention to provide a method of providing amplification of optical wavelengths in one band, e.g. the L-band, by means of already existing components, such as optical amplifiers adapted to amplify optical wavelengths in another band, thus avoiding the need to keep separate amplifiers in stock for each band.

According to the invention, this is achieved by coupling a length of active fibre in series with an optical fibre amplifier adapted to amplify optical wavelengths in a second band, and utilizing Amplified Spontaneous Emission (ASE) from the fibre amplifier as pump energy for the length of active fibre to provide amplification of optical wavelengths in the first band.

By simply coupling the length of active fibre in series with an already existing optical fibre amplifier adapted to amplify optical wavelengths in another band, optical amplification in a new band is achieved without having to design a new amplifier specifically for this band. In this way a system employing more than one band can be realized by means of only one single type of optical amplifier. This solution utilizes the fact that detrimental ASE (amplified spontaneous emission) generated in the optical fibre amplifier adapted to amplify optical wavelengths in the other band is used as a secondary pump source for the series coupled length of active fibre.

When the length of active fibre is coupled after the optical fibre amplifier, as stated in claim 2, the solution is also applicable in those situations where the optical fibre amplifier adapted to amplify optical wavelengths in the other band is provided with an optical isolator in its input, which is often the case. Such an isolator would prevent the ASE from travelling to an active fibre coupled before the amplifier.

In expedient embodiments of the invention, which are stated in claims 3 and 4 respectively, a length of erbium-doped fibre is used as the length of active fibre, and an erbium-doped fibre amplifier is used as the optical fibre amplifier.

When a backward pumped erbium-doped fibre amplifier is used, as stated in claim 5, a more efficient solution is achieved due to the reuse of wasted ASE power propagating in the opposite direction of the pump light of the optical amplifier.

In an expedient embodiment of the invention, which is stated in claim 6, the first band is the so-called L-band comprising wavelengths from 1570 nm to 1610 nm and the second band is the so-called C-band comprising wavelengths from 1530 nm to 1570 nm.

As mentioned, the invention also relates to an optical amplifier device adapted to amplify optical wavelengths in a first band. When the device comprises a separate length of active fibre coupled in series with an optical fibre amplifier adapted to amplify optical wavelengths in a second band, amplification of optical wavelengths in one band, e.g. the L-band, is obtained by means of already existing components, such as optical amplifiers adapted to amplify optical wavelengths in another band, thus avoiding the need to keep separate amplifiers in stock for each band.

When the device simply comprises the length of active fibre in series with an already existing optical fibre amplifier adapted to amplify optical wavelengths in another band, optical amplification in a new band is achieved without having to design a new amplifier specifically for this band. In this way a system employing more than one band can be realized by means of only one single type of optical amplifier. This solution utilizes the fact that detrimental ASE (amplified spontaneous emission) generated in the optical fibre amplifier adapted to amplify optical wavelengths in the other band is used as a secondary pump source for the series coupled length of active fibre.

When the length of active fibre is coupled after the optical fibre amplifier, as stated in claim 8, the solution is also applicable in those situations where the optical fibre amplifier adapted to amplify optical wavelengths in the other band is provided with an optical isolator in its input, which is often the case. Such an isolator would prevent the ASE from travelling to an active fibre coupled before the amplifier.

In expedient embodiments of the invention, which are stated in claims 9 and 10 respectively, the length of active fibre is a length of erbium-doped fibre, and the optical fibre amplifier is an erbium-doped fibre amplifier.

When the erbium-doped fibre amplifier is backward pumped, as stated in claim 11, a more efficient solution is achieved due to the reuse of wasted ASE power propagating in the opposite direction of the pump light of the optical amplifier.

In an expedient embodiment of the invention, which is stated in claim 12, the first band is the so-called L-band comprising wavelengths from 1570 nm to 1610 nm and the second band is the so-called C-band comprising wavelengths from 1530 nm to 1570 nm.

The invention will now be described more fully below with reference to the drawing, in which
figure 1 shows a known fibre amplifier, and
figure 2 shows an optical amplifier device according to the invention.

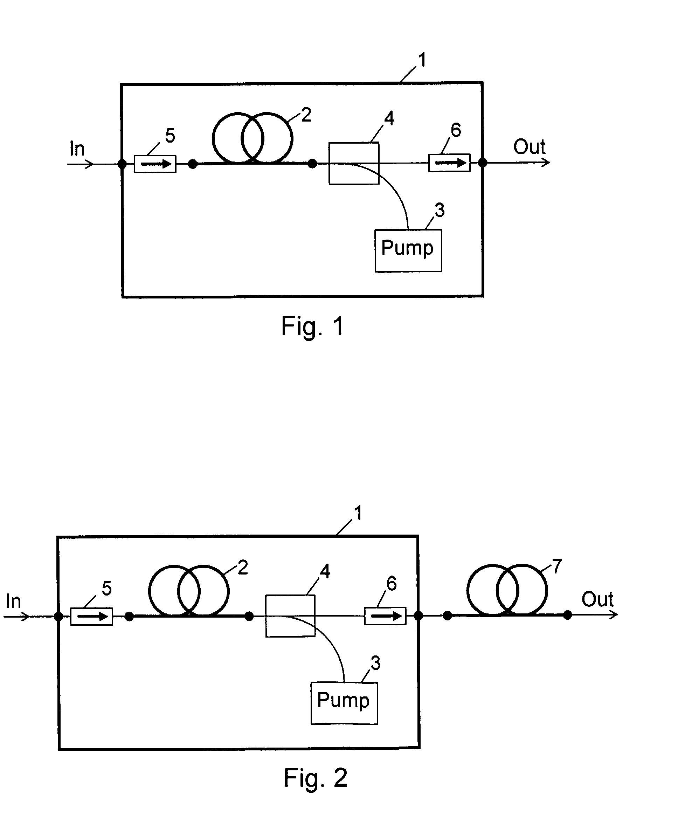

Figure 1 shows a well known erbium-doped fibre amplifier 1 which is designed for use in the so-called C-band (1530-1570 nm). The active element is the erbium-doped fibre 2, the length of which could be e.g. 10-25 m. Pump energy is delivered from a pump laser 3 through an optical coupler 4 into the fibre 2. The pump laser 3 could typically be a 980 nm laser diode. Information carrying optical signals propagates through an optical isolator 5, having the purpose of blocking optical signals from propagation in the backward direction, to the active fibre 2 in which they are amplified. The amplified signals are then transmitted through the optical coupler 4 and another isolator 6 to the output of the amplifier.

In the absence of input signals in the C-band to the fibre 2 a certain level of amplified spontaneous emission (ASE) in the C-band is generated in the fibre and the ASE, which is normally considered as noise, will propagate to the output of the amplifier and eventually to transmission fibres connected thereto. ASE will also be generated when input signals in the C-band are applied to the fibre, but at a considerably lower level.

Figure 2 shows an optical amplifier device according to the invention. The C-band amplifier 1 of figure 1 is now combined with an extra length of optical active fibre 7. The fibre 7 is typically also an erbium-doped fibre and the length of the fibre could typically be from 60 to 150 m. If input signals in the L-band are applied to the amplifier 1 a lot of ASE in the C-band (typically 1550 nm) will be generated in the fibre 2 and it will propagate to the active fibre 7. Here it will act as a secondary pump source for the erbium-doped fibre 7 and thus this fibre will be able to provide amplification in the L-band, since it is well known that pump energy in the 1550 nm region will provide gain in the L-band in an erbium-doped fibre. The original L-band signals will propagate through the amplifier 1 with a low gain, and they will now be amplified in the fibre 7 and thus an L-band amplifier is the result.

It should be noted that the C-band amplifier 1 is used without any modifications, i.e. directly from the shelf, and only combined with the fibre 7 in order to create an L-band amplifier. This has the very attractive advantage that a dual band (i.e. C-band and L-band) system can be built with the use of only one type of amplifier, i.e. the well known C-band amplifier.

The C-band amplifier used in figures 1 and 2 is a backward pumped erbium-doped fibre amplifier and the extra length of fibre 7 is connected after the C-band amplifier. This is a very good combination due to the presence of the optical isolators 5 and 6. However, if C-band amplifiers without such isolators are used, other combinations are possible. Forward pumped erbium-doped fibre amplifiers could be used and/or the extra length of active fibre could be placed before the amplifier.

Although a preferred embodiment of the present invention has been described and shown, the invention is not restricted to it, but may also be embodied in other ways within the scope of the subject-matter defined in the following claims. As an example the same principle can be used for other bands than the described C- and L-bands.

## Claims

1. A method of providing amplification of optical wavelengths in a first band, **characterized** by coupling a length of active fibre (7) in series with an optical fibre amplifier (1) adapted to amplify optical wavelengths in a second band, and utilizing Amplified Spontaneous Emission (ASE) from the fibre amplifier (1) as pump energy for the length of active fibre (7) to provide amplification of optical wavelengths in the first band.

2. A method according to claim 1, **characterized** in that the length of active fibre (7) is coupled after the optical fibre amplifier (1) .

3. A method according to claim 1 or 2, **characterized** in that a length of erbium-doped fibre is used as the length of active fibre (7).

4. A method according to claims 1-3, **characterized** in that an erbium-doped fibre amplifier is used as the optical fibre amplifier (1).

5. A method according to claim 4, **characterized** in that the erbium-doped fibre amplifier (1) is backward pumped.

6. A method according to claims 1-5, **characterized** in that said first band is the so-called L-band comprising wavelengths from 1570 nm to 1610 nm and that said second band is the so-called C-band comprising wavelengths from 1530 nm to 1570 nm.

7. An optical amplifier device adapted to amplify optical wavelengths in a first band, **characterized** in that it comprises a separate length of active fibre (7) coupled in series with an optical fibre amplifier (1) adapted to amplify optical wavelengths in a second band.

8. An optical amplifier device according to claim 7, **characterized** in that the length of active fibre (7) is coupled after the optical fibre amplifier (1) .

9. An optical amplifier device according to claim 7 or 8, **characterized** in that the length of active fibre (7) is a length of erbium-doped fibre.

10. An optical amplifier device according to claims 7-9, **characterized** in that the optical fibre amplifier (1) is an erbium-doped fibre amplifier.

11. An optical amplifier device according to claim 10, **characterized** in that the erbium-doped fibre amplifier (1) is backward pumped.

12. An optical amplifier device according to claims 7-11, **characterized** in that said first band is the so-called L-band comprising wavelengths from 1570 nm to 1610 nm and that said second band is the so-called C-band comprising wavelengths from 1530 nm to 1570 nm.
